# EUROPEAN PATENT APPLICATION

(11) **EP 1 492 035 A2**
(43) Date of publication of application: **29.12.2004**
(21) Application number: 04252573.3
(22) Date of filing: 01.05.2004
(51) Int. Cl.: G06F 17/30

(54) **Defining user-defined data types and/or user-defined methods using an interpreted programming language**

(30) Priority: 26.06.2003 US 607145
(71) Applicant: NCR INTERNATIONAL INC., Dayton, Ohio 45479 (US)
(72) Inventor: Marek, Andreas, Encinitas, CA 92024 (US); Kosic, Joseph C., San Diego, CA 92127 (US); Frazier, John D., Ramona, CA 92065 (US)
(74) Representative: Williamson, Brian

(57) **Abstract**

A database system includes user-defined data types (UDTs) and user-defmed methods (UDMs) that are defined by code according to an interpreted programming language (e.g., JAVA, C#, etc.). A virtual machine or other interpreter is provided to execute the interpreted programming language code defining the UDTs and UDMs. An interface is provided between a database and the virtual machine to enable communication between the database and the virtual machine.

## Description

A database is a collection of logically related data arranged in a predetermined format, such as in tables that contain rows and columns. To access the content of a table in the database, queries according to a standard database query language (such as Structured Query Language) are submitted to the database system. Queries can also be issued to create or modify data structures, such as tables, views, and so forth.

A conventional relational database management system typically provides predefined simple data types, such as integers, real numbers, character strings, and so forth, for storing different types of data. More recently, to enhance flexibility in storing different types of data, user-defined data types (UDTs) have been implemented. A benefit offered by UDTs is the flexibility they offer to users or database vendors, who are able to create UDTs with SQL statements to suit the needs of particular database applications.

A UDT is also associated with various user-defined methods (UDMs), which are software routines or modules invoked to perform various tasks with respect to data stored in tables. Conventionally, the programming language used to create the code corresponding to UDTs and UDMs is a compiled programming language, such as C. However, compiled languages such as C do not offer the level of flexibility or richness of features that may be available with other types of programming languages.

In general, methods and apparatus are provided to enable the use of an interpreted programming language to create user-defined data types (UDTs) and/or user-defined methods (UDMs). For example, a method for use in a database system includes defining a UDT and/or UDM with code according to an interpreted programming language. A table containing at least one attribute according to the UDT is stored.

Other or alternative features will become more apparent from the following description, from the drawings, and from the claims.

An embodiment of the present invention will now be described, by way of example with reference to the accompanying drawings, in which:
Fig. 1 is a block diagram of a database system according to one example implementation.
Fig. 2 is a flow diagram of a procedure of using SQL syntax to create and use interpreted UDTs and UDMs, according to one embodiment of the invention.

In the following description, numerous details are set forth to provide an understanding of the present invention. However, it will be understood by those skilled in the art that the present invention may be practiced without these details and that numerous variations or modifications from the described embodiments are possible.

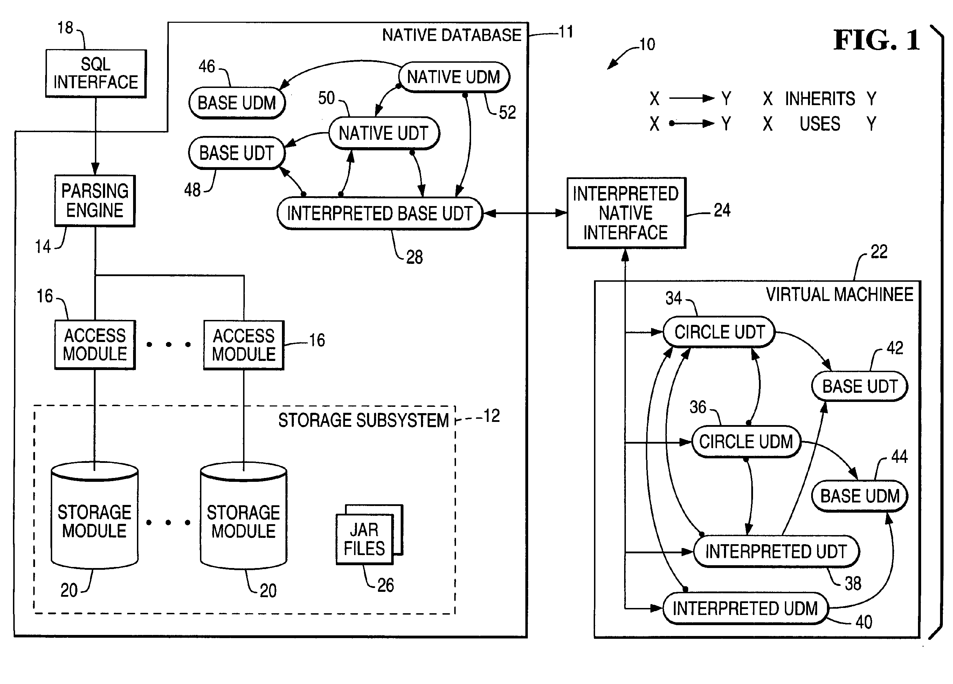

Fig. 1 illustrates an example arrangement of a database system 10 according to one embodiment of the invention. The database system 10 includes a native database 11, which includes a database application to enable the access (reading or writing) of data stored in a storage subsystem 12. In the example shown in Fig. 1, the database application includes a parsing engine 14 and plural access modules 16. The parsing engine 14 includes a parser that receives a query from a user interface, such as an SQL (Structured Query Language) interface 18. The parser parses the query and checks the query for proper syntax. Based on the query, the parsing engine 14 generates steps to be performed by the access modules 16, with the parsing engine 14 sending steps (in the form of instructions or commands) to the access modules 16, which in turn perform operations on data or data structures stored in storage modules 20 in the storage subsystem 12. The example arrangement shown in Fig. 1 is a parallel database system that includes multiple access modules 16 that are executable concurrently to access data stored in respective storage modules 20. In an alternative embodiment, instead of a multiprocessing system, a uni-processing system is employed.

Each access module 16 is capable of performing the following tasks: insert, delete, or modify contents of tables; create, modify, or delete definitions of tables; retrieve information from definitions and tables; and lock databases and tables. In one example, each access module 16 is based on an access module processor (AMP) used in some TERADATA® database systems from NCR Corporation.

The database system 10 also provides user-defined data types (UDTs) and user-defined methods (UDMs). One version of SQL that provides data definition language (DDL) statements for creating UDTs is SQL-99 (also referred to as SQL3). However, in other embodiments, other versions of SQL or other database query languages also provide statements for creating UDTs. SQL-99 also provides statements for creating UDMs as well as user-defined functions (UDFs). A UDM is associated with a UDT, while a UDF can be used with either UDTs or predefined simple data types (e.g., integers, real numbers, character strings, and so forth).

According to some embodiments of the invention, to enhance features available to UDTs and UDMs, an interpreted programming language, such as JAVA or C#, is used to define the UDTs and/or UDMs. UDTs or UDMs defined with an interpreted programming language are referred to as interpreted UDTs or UDMs. An interpreted programming language such as JAVA or C# provides a relatively rich pool of resources that can enhance the capabilities of UDTs and/or UDMs. A benefit of using an interpreted programming language to define a UDT or UDM is that the UDT or UDM can be made independent of the underlying platform (hardware and/or software platform) that a particular database system is implemented on. For example, the UDT or UDM created with an interpreted programming language can be made independent of the operating system (e.g., WINDOWS®, UNIX, LINUX, and so forth) of the database system. The platform independence is particularly useful in a networked environment, in which different types of systems with different operating systems may be connected to a network.

Code written in an interpreted programming language is run through an interpreter, which translates the high-level language code to an intermediate form, which the interpreter then executes. In contrast, code written in a compiled programming language is translated by a compiler to machine-level or assembly code, which is usually a relatively time consuming process.

As noted above, JAVA and C# languages are examples of interpreted programming languages. JAVA code is translated to a bytecode format, with the bytecode executed by a JAVA virtual machine. C# code is also similarly executed by a virtual machine. In general, code according to an interpreted programming language can be executed directly by an interpreter such as the virtual machine 22, or translated or compiled into a different format for execution by the interpreter. As virtual machines can be ported to work with various operating systems, the interpreted programming language code can be executed in many computers with different operating systems, so long as the appropriate virtual machine is running in the computer.

As shown in Figure 1, the interpreted program language code that represents a UDT and/or UDM is executed on a virtual machine 22 in the database system 10. The virtual machine 22 can be a JAVA virtual machine, a C# virtual machine, and so forth. Various example UDTs and UDMs are illustrated as being part of the native database 11 and the virtual machine 22. These will be explained in further detail below.

In the ensuing discussion, it is assumed that the UDTs and UDMs are written in JAVA code, and that the virtual machine 22 is a JAVA virtual machine. Bytecode to be executed by the JAVA virtual machine is in a Class file format, which defines the representation of a class or interface, including details such as byte ordering.

The database system 10 also includes an interpreted native interface 24 that provides communication between the native program modules (the UDT and UDM modules in the native database 11) and the interpreted program modules (UDT and UDM modules executed by the virtual machine 22). The interpreted native interface 24 essentially provides hooks for native code (in the native database 11) to call on resources resident in the virtual machine 22, as well as hooks for interpreted code (in the virtual machine 22) to call on resources resident in the database 11. Thus, the interpreted native interface 24 is the conduit for the exchanges of data that are part of normal UDT and UDM operations between the native database 11 and the virtual machine 22. In addition, the interpreted native interface 24 can output debug information from the interpreted environment (virtual machine 22) to the native environment (native database 11). Also, the interpreted native interface 24 may include the use of specific memory pointers that are not accessible in the virtual machine 22. If JAVA is used, then the interpreted native interface 24 is according to the JAVA Native Interface (JNI) protocol.

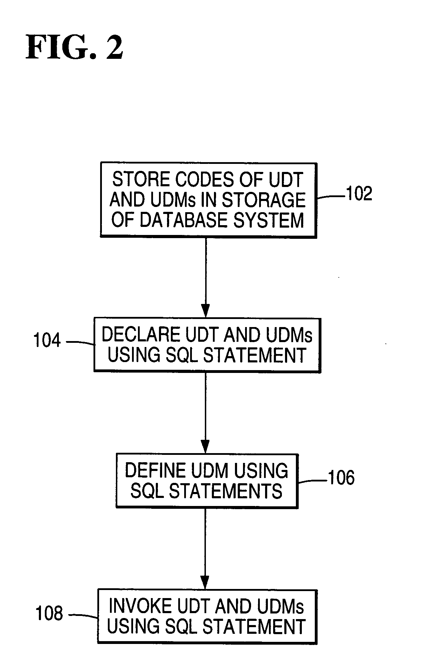

Fig. 2 illustrates a procedure according to one embodiment of using SQL syntax to create and use interpreted UDTs and UDMs, and incorporating the interpreted UDTs and UDMs into the native database 11.

Files containing code of a UDT and associated UDMs are stored (at 102) in a storage of the database system 10. In one implementation, such files are in the form of JAR files 26. The storage of bytecodes in the JAR files 26 enables the creation and use of the interpreted UDT and associated UDMs. In other embodiments, code according to another interpreted programming language is stored.

Next, the UDT and associated UDMs are declared (at 104) in response to receipt of a CREATE TYPE statement. The CREATE TYPE statement is submitted from the SQL interface 18 to the native database 11, with the parsing engine 14 processing the CREATE TYPE statement and creating the appropriate data structures in the native database 11 in response to the statement. An example CREATE TYPE statement to create an example UDT, referred to as CircleUdt, is provided below:
CREATE TYPE CircleUdt
LIBRARY 'S!C:\types_jar\circle_udt.jar!N!ncr/tdat/udt/CircleUdt'
CONSTRUCTOR METHOD CircleUdt(x INTEGER, y INTEGER, radius
INTEGER) RETURNS CircleUdt
LANGUAGE JAVA
METHOD AREA()
RETURNS FLOAT
LANGUAGE JAVA
PARAMETER STYLE TD_GENERAL;

The example CREATE TYPE statement includes a LIBRARY field that specifies the path to the JAR file containing the bytecode of the JAVA UDT, in this case CircleUdt. The bytecode of the CircleUdt, in the form of the JAR file, is stored with other JAR files 26 (Fig. 1) in a well-known directory (or directories) for use by the JAVA virtual machine 22. The path and class name of CircleUdt (e.g., ncr/tdat/udt/CircleUdt) is used to create an instance of this UDT inside the JAVA virtual machine 22. CircleUdt is also the SQL name of the UDT that is useable in the native database 11 in subsequent SQL statements. The CREATE TYPE statement also specifies a CONSTRUCTOR method, which is a default constructor UDM that can create an empty (un-initialized) instance of CircleUdt.

The CONSTRUCTOR UDM, along with an AREA UDM, are declared in the CREATE TYPE statement above. After being declared, the UDMs are defined (at 106) in response to CREATE METHOD statements received by the parsing engine 14, such as the following example statements:
CREATE CONSTRUCTOR METHOD CircleUdt(x INTEGER, y INTEGER, radius INTEGER)
RETURNS CircleUdt
FOR CircleUdt
EXTERNAL NAME 'SJ!C:\types_jar\circle_cons.jar
   !N ! ncr/tdat/udm/CircleUdm_constructor 1! M! constructor 1';
CREATE METHOD AREA()
RETURNS FLOAT
FOR CircleUdt
EXTERNAL NAME 'SJ!C:\types_jar\circle_area.jar
   !N!ncr/tdat/udm/CircleUdm_area! M! area';

The interpreted UDMs created above, when executed, operate on attributes defined according to CircleUDT. The bytecode for each UDM is stored at the location specified in the EXTERNAL NAME field of each CREATE METHOD statement. The JAR file for the CONSTRUCTOR UDM is stored at the following location:
'SJ!C:\types_jar\circle_cons.jar. Similarly, the JAR file for the AREA UDM is located at the following location: 'SJ!C:\types_jar\circle_area.jar. Also, in the respective EXTERNAL NAME fields of the example CREATE statements above, the path and class names of the JAVA UDM containers (e.g., ncr/tdat/udm/CircleUdm_constructor1 and ncr/tdat/udm/CircleUdm_area) are used to create instances of the UDM containers inside the JAVA virtual machine 22. The two UDM containers defined are the actual methods that are eventually invoked (at 108) when an SQL statement calls for them. An example of a sequence of such SQL statements is provided below:
CREATE TABLE TestCircleUdt (c1 integer, c2 CircleUdt);
INSERT INTO TestCircleUdt values (1, new CircleUdt(5,5,10));
SEL c2.AREA() from TestCircleUdt;

The sequence of SQL statements given above first creates a table named TestCircleUdt, which contains a first column c (of type integer) and a second column c2 (of type CircleUdt). The CREATE TABLE statement causes the database 11 to invoke the default constructor function (the CONSTRUCTOR UDM) to instantiate an empty instance of CircleUDT in the database dictionary of the native database 11. Then, an initialized instance of CircleUdt is inserted into the table by the INSERT statement, which is performed by a call to the JAVA UDM named constructor1 contained in ncr/tdat/udm/CircleUdm_constructor1. Finally, the area of the initialized CircleUdt is obtained in response to the SELECT statement, which is performed by a call to the JAVA UDM named AREA contained in ncr/tdat/udm/CircleUdm_area.

Processing of the SQL statements above is further described below. The native database 11 (in particular the parsing engine 14) parses received SQL statements, including CREATE TYPE, CREATE METHOD, and CREATE TABLE statements. Using the information given in the SQL CREATE TYPE and CREATE METHOD statements, native functions (that are native to the database 11) are dynamically generated at run time to define entry points for the UDT and UDMs described. An entry point is subsequently called when an SQL statement uses a declared UDT or UDM. The following is an example of the default constructor function dynamically generated for the CircleUdt declared above:

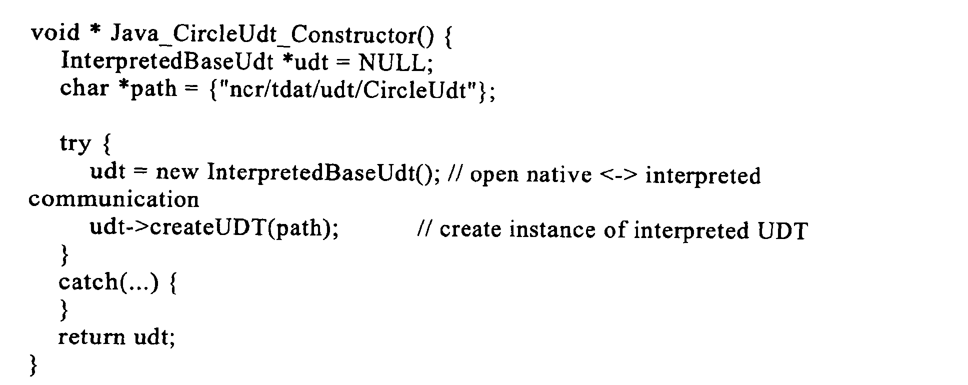

The class InterpretedBaseUdt (identified by reference numeral 28 in Fig. 1) is a container for an interpreted UDT. Its purpose is to start the virtual machine 22 and to manage the communication between native and interpreted program modules (in the database 11 and the virtual machine 22, respectively). All interpreted UDTs and UDMs work through this container 28. Native UDTs and UDMs use this container 28 to work with interpreted UDTs. The reverse is also true, as interpreted UDTs and UDMs work with native UDTs through this container.

As shown in Fig. 1, CircleUDT and CircleUDM containers 34 and 36, written in JAVA code as discussed above, are executed by the JAVA virtual machine 22. The interpreted CircleUDT and CircleUDM 34 and 36 are built upon an interpreted BaseUDT 42 and BaseUDM 44, respectively. In other words, CircleUDT 34 inherits characteristics and UDMs of the BaseUDT 42, plus other characteristics and UDMs that may be defined for CircleUDT 34. Similarly, CircleUDM 36 is built upon BaseUDM 44. Other interpreted UDTs and UDMs may also be executed by the virtual machine 22, such as InterpretedUDT 38 and InterpretedUDM 40, which are also built upon BaseUDT 42 and BaseUDM 46.

In the native database 11, native UDTs and UDMs can also be provided, such as NativeUDT 50 and NativeUDM 52. The native UDTs and UDMs are independent of the interpreted UDTs and UDMs executable by the virtual machine 22. For example, the NativeUDT 50 can be a UDT to calculate rectangles, with NativeUDM 52 being associated with NativeUDT 50. NativeUDT 50 and NativeUDM 52 are based on BaseUDT 48 and BaseUDM 46.

The InterpretedBaseUDT container 28 is also used in the functions for the CONSTRUCTOR and AREA UDMs that are dynamically generated for the CircleUdt declared above. The following are example functions for the CONSTRUCTOR and AREA UDMs:

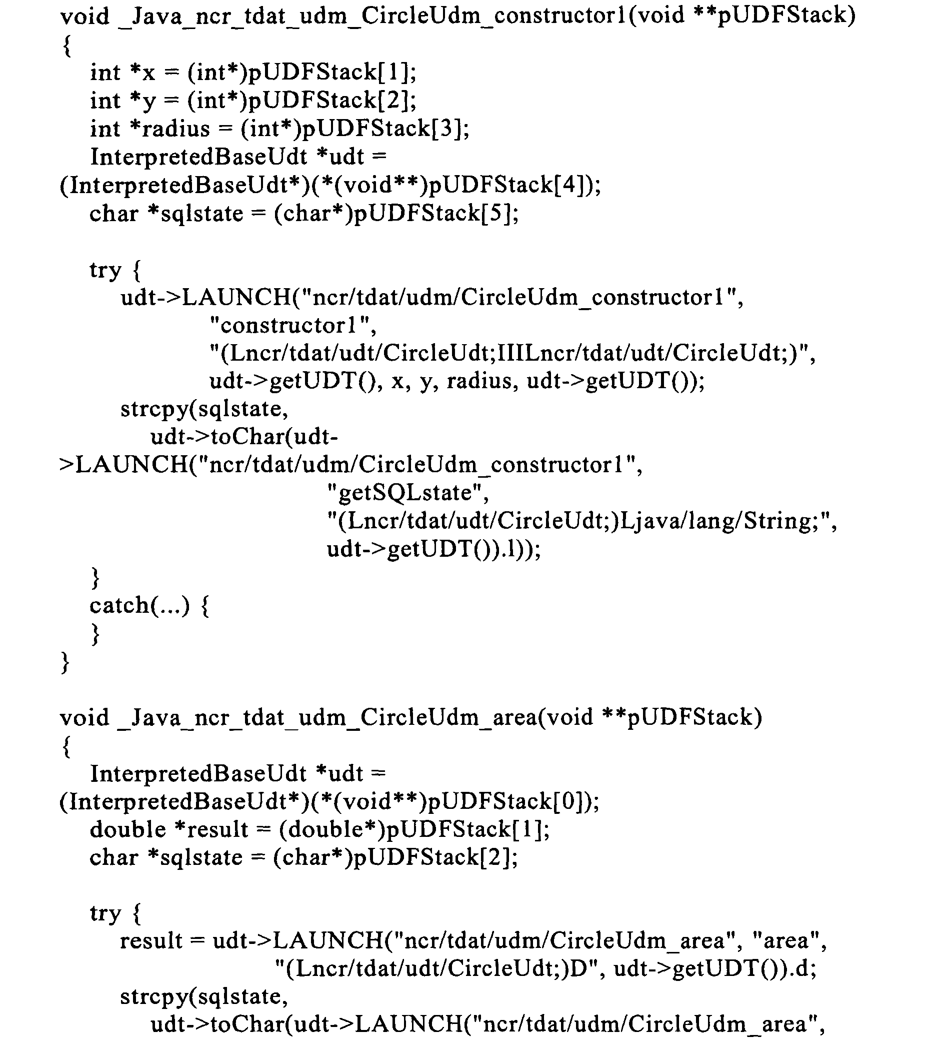

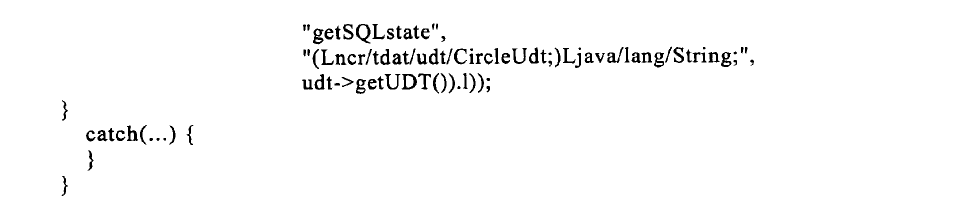

The LAUNCH method specified in the functions above is a method defined in the class InterpretedBaseUdt. The LAUNCH method uses the interpreted native interface 24 to communicate with the CircleUdt residing in the virtual machine 22. The LAUNCH method has the following signature, again using JAVA in the example:

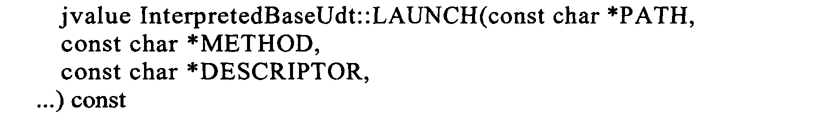

The parameter PATH provides the path and name of the UDM container. METHOD provides the name of the method to invoke inside the UDM container. DESCRIPTOR provides the signature of the method to invoke. A further optional, variable argument list for the method can also be specified. The return value is a union of any primitive data type or JAVA class.

As discussed above, a technique has been provided to use SQL syntax through the SQL interface 18 (Fig. 1) to create and use interpreted UDTs and UDMs (defined according to an interpreted programming language such as JAVA, C#, and so forth). Using interpreted UDTs and UDMs, knowledge of the native database implementation is not needed, as the interpreted UDTs and UDMs are executed on virtual machines.

Instructions of the various software routines or modules discussed herein (such as the parsing engine 24, access modules 16, UDTs, UDMs, virtual machine 22, interpreted native interface 24, and other modules) are executed on control units or processors. The control units or processors include microprocessors, microcontrollers, processor modules or subsystems (including one or more microprocessors or microcontrollers), or other control or computing devices. As used here, a "controller" refers to hardware, software, or a combination thereof. A "controller" can refer to a single component or to plural components (whether software or hardware).

Data and instructions (of the various software routines or modules) are stored on one or more machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs).

The instructions of the software routines or modules are loaded or transported to a system in one of many different ways. For example, code segments including instructions stored on floppy disks, CD or DVD media, a hard disk, or transported through a network interface card, modem, or other interface device are loaded into the system and executed as corresponding software modules or layers. In the loading or transport process, data signals that are embodied in carrier waves (transmitted over telephone lines, network lines, wireless links, cables, and the like) communicate the code segments, including instructions, to the system. Such carrier waves are in the form of electrical, optical, acoustical, electromagnetic, or other types of signals.

While the invention has been disclosed with respect to a limited number of embodiments, those skilled in the art will appreciate numerous modifications and variations therefrom. It is intended that the appended claims cover such modifications and variations as fall within the scope of the invention.

## Claims

1. A method, for use in a database system, of:
defining a user-defined data type (UDT) with code according to an interpreted programming language; and
storing a table containing at least one attribute according to the user-defined data type.

2. The method of claim 1, further comprising defining a user-defined method (UDM) associated with the UDT with code according to the interpreted programming language.

3. The method of claim 2, further comprising executing the UDM with an interpreter.

4. The method of claim 3, wherein executing the UDM with the interpreter comprises executing the UDM with a virtual machine preferably a JAVA virtual machine

5. The method of claim 1, wherein defining the UDT with code according to the interpreted programming language comprises defining the UDT with code according to one of JAVA and C#.

6. The method of claim 1, further comprising receiving a Structured Query Language (SQL) statement to create the UDT, the SQL statement specifying a file containing the code according to the interpreted programming language.

7. The method of claim 6, further comprising declaring a user-defined method (UDM) in the statement to create the UDT.

8. The method of claim 7, further comprising receiving a second SQL statement to create the UDM, wherein the second SQL statement specifies a file containing code to define the UDM, the code according to the interpreted programming language.

9. The method of claim 1, further comprising:
providing an interpreted programming language virtual machine to provide a container for the UDT; and
executing a routine to establish a connection from a database in the database system to the virtual machine.

10. The method of claim 9, further comprising providing an interface between the database and the virtual machine.

11. The method of claim 9, further comprising receiving a Structured Query Language (SQL) statement to create the UDT.

12. An article including at least one storage medium containing instructions that when executed cause a database system to:
define a user-defined data type (UDT) with code according to an interpreted programming language; and
store a table containing at least one attribute according to the user-defined data type.

13. The article of claim 12, wherein the instructions when executed cause the database system to define a user-defined method (UDM) associated with the UDT with code according to the interpreted programming language.

14. The article of claim 13, wherein the instructions when executed cause the database system to execute the UDM on an interpreted programming language virtual machine.

15. The article of claim 12, wherein defining the UDT with code according to the interpreted programming language comprises defining the UDT with code according to one of JAVA and C#.

16. The article of claim 12, wherein the instructions when executed cause the database system to receive a Structured Query Language (SQL) statement to create the UDT, the SQL statement specifying a file containing the code according to the interpreted programming language.

17. The article of claim 16, wherein the instructions when executed cause the database system to declare a user-defined method (UDM) in the statement to create the UDT.

18. The article of claim 17, wherein the instructions when executed cause the database system to receive a second SQL statement to create the UDM, wherein the second statement specifies a file containing code to define the UDM, the code according to the interpreted programming language.

19. A database system comprising:
a storage to store code according to an interpreted programming language; and
a controller to receive a database query to create a user defined data type (UDT), the database query containing a clause identifying a storage location of the code according to the interpreted programming language.

20. The database system of claim 19, further comprising an interpreter to execute the code according to the interpreted programming language.

21. The database system of claim 20, the storage to store second code according to the interpreted programming language, and the controller to further receive a second database query to create a user-defined method (UDM) associated with the UDT, the second database query identifying a location of the second code.
